# EUROPEAN PATENT APPLICATION

(11) **EP 2 369 269 A1**
(43) Date of publication of application: **28.09.2011**
(21) Application number: 09833342.0
(22) Date of filing: 07.12.2009
(51) Int. Cl.: F25B 39/04, B23K 1/00, B23K 1/002, F25B 43/00, F28F 9/02, F28F 9/26, B23K 101/14

(54) **HEAT EXCHANGER AND METHOD FOR MANUFACTURING SAME**

(30) Priority: 15.12.2008 JP 2008317823; 15.12.2008 JP 2008317824
(71) Applicant: Calsonic Kansei Corporation, Saitama-shi Saitama 331-8501 (JP)
(72) Inventor: CHIKUMA, Hiroshi, Saitama-shi Saitama 331-8501 (JP); KAWAI, Yoshihiro, Saitama-shi Saitama 331-8501 (JP); FUNATSU, Takumi, Saitama-shi Saitama 331-8501 (JP); YAMAZAKI, Makoto, Saitama-shi Saitama 331-8501 (JP)
(74) Representative: Oxley, Robin John George
(86) International application number: PCT/JP2009/070448
(87) International publication number: WO 2010/071038

(57) **Abstract**

A heat exchanger 1 includes a pair of tanks 2 and 3 arranged a certain distance apart from each other, a plurality of tubes 4a whose both end portions are connected with the pair of tanks 2 and 3, a long receiver tank 5 arranged along and adjacently to the tank 3 and communicatably connected with the tank 3, and a reception member 20 contained in the receiver tank 5. An upper opening end portion 13b has an opening portion at one side in a longitudinal direction of the receiver tank 5 and having a reduced diameter, and a block member 15 blocks the upper opening end portion 13b. An entire of the heat exchanger 1 except the reception member 20 and the block member 15 are integrally formed by a brazing process. The reception member 20 is inserted through the upper opening end portion 13b and arranged in the receiver tank 5 after the brazing process, and then the block member 15 is joined by brazing with the upper opening end portion 13b after the reception member 20 is inserted and arranged therein.

## Description

### [TECHNICAL FIELD]

The present invention relates to a heat exchanger and its manufacturing method.

### [BACKGROUND OF THE INVENTION]

Patent Document 1 discloses a conventional heat exchanger in which a drying agent is inserted in a receiver tank whose interior is sealed by a block member.
Patent Document 1: Japanese Patent Application Laid-Open Publication Number 08-110125

### [DISCLOSURE OF THE INVENTION]

### [PROBLEM(S) TO BE SOLVED BY THE INVENTION]

However, in the conventional heat exchanger, the block member is joined by welding to an opening edge portion of the receiver tank for example in order to improve the pressure tightness of the receiver tank. In this case, as the receiver tank and a tank of the heat exchanger are very closer to each other, problems such as listed below occur.
Specifically, it is difficult to assure a work space for joining the block member.
In addition, the tank of the heat exchanger might deform due to heat generated when the block member is joined.
Further, as the heat mass of the receiver tank is large, the temperature of the block member is not heated up to a desired temperature and consequently it takes a long time to join.

The present invention is made to solve the above-described problems, and its object is to provide a heat exchanger in which a block member of a receiver tank can be nicely joined so that the pressure tightness of a receiver tank can be improved.

### [MEANS FOR SOLVING THE PROBLEMS]

A heat exchanger of the present invention includes a pair of tanks arranged a certain distance apart from each other, a plurality of tubes whose both end portions are communicatably connected with the pair of tanks, a receiver tank which has a main body arranged along and adjacently to one of the pair of tanks and is communicatably connected with the tank, having an opening end portion at one side in a longitudinal direction of the main tank, a reception member which is formed to be insertable through the opening end portion and contained in the receiver tank, and a block member fixed at the opening end portion to cover the opening end portion. The opening end portion is formed as a reduced diameter portion whose outer diameter is set smaller than the outer diameter of the other side of the main body in the longitudinal direction, or it is formed to project outward in the longitudinal direction relative to the one tank.

A method of the present invention is one for manufacturing a heat exchanger including a pair of tanks arranged a certain distance apart from each other, a plurality of tubes whose both end portions are communicatably connected with the pair of tanks, a receiver tank which has a main body arranged along and adjacently to one of the pair of tanks and is communicatably connected with the tank, having an opening end portion at one side in a longitudinal direction of the main tank, a reception member which is formed to be insertable through the opening end portion and contained in the receiver tank and a block member fixed at the opening end portion to cover the opening end portion. The method includes a process of preparing the receiver tank that has one of the opening end portion whose outer diameter is set smaller than an outer diameter of the other side in the longitudinal direction of the main body and the opening end portion which projects outward in the longitudinal direction relative to the one of tanks, a process of preparing the tanks, the plurality of tubes, the reception member and the block member which constitute the heat exchanger, a process of integrally forming the whole of the heat exchanger except the reception member and the block member by brazing, a process of inserting and arranging the reception member in the receive tank through the opening end portion after the brazing process, and a process of joining the block member on the opening end portion by one of welding and brazing.

### [EFFECT OF THE INVENTION]

The heat exchanger and its manufacturing method of the present invention are such a construction and a manufacturing method that they can be equipped with one of the opening end portion in which the outer diameter of the one side in the longitudinal direction of the receiver tank containing the reception member is set smaller than the outer diameter of the main body of the other side in the longitudinal direction or the opening end portion projecting outward in the longitudinal direction relative to the one of tanks. In addition, the whole of the heat exchanger except the reception member and the block member is integrally formed by the brazing process or the like, and then the reception member is inserted and arranged in the receiver tank after the brazing process and the like. The block member is fixed by welding or brazing on the opening end portion after the reception member is inserted and arranged.

Consequently, the heat exchanger and its manufacturing method of the present invention can assure a work space for joining the block member, preventing a harmful effect on the tank during joining, decreasing jointing material, and improving the efficiency in joining work, and also improving a brazing performance because of heat mass of the receiver tank, all together.

### [BRIEF DESCRIPTION OF THE DRAWINGS]

FIG. 1 is a front view showing a heat exchanger of a first embodiment according to the present invention;
FIG. 2 is an exploded perspective view of a tank of the heat exchanger of the first embodiment;
FIG. 3 is a perspective view of the tank shown in FIG. 2;
FIG. 4 is a an exploded perspective view of the tank shown in FIG. 2;
FIG. 5 is a perspective view of the tank shown in FIG. 2;
FIG. 6 is an exploded perspective view showing a receiver tank which is used in the heat exchanger of the first embodiment;
FIG. 7 is a perspective view of the receiver tank shown in FIG. 6;
FIG. 8 is an exploded perspective view of the receiver tank and intermediate members which are used in the heat exchanger of the first embodiment;
FIG. 9 is a cross sectional side view explaining a lower interior of the receiver tank shown in FIG. 6;
FIG. 10 is a cross sectional view taken along a line S10 - S10 in
FIG. 9;

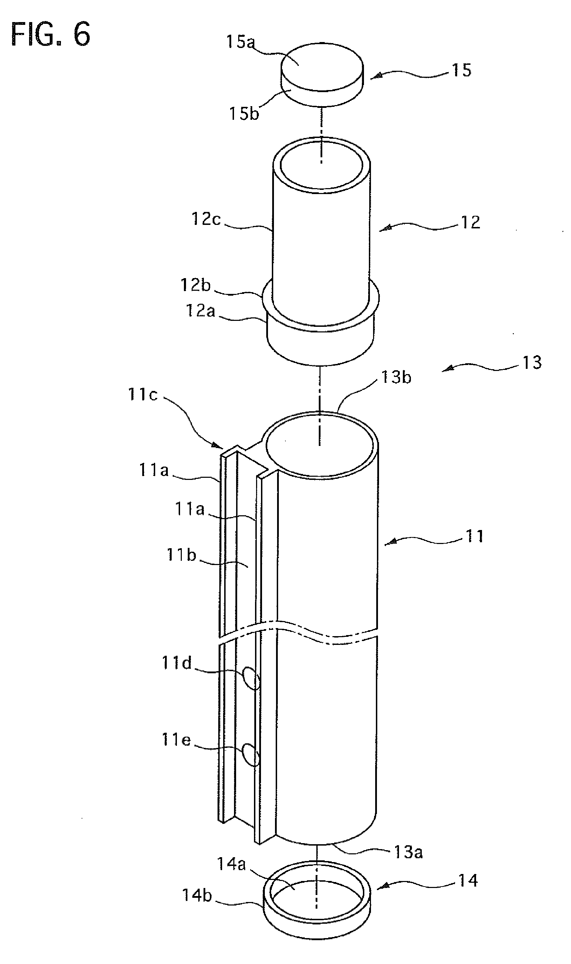

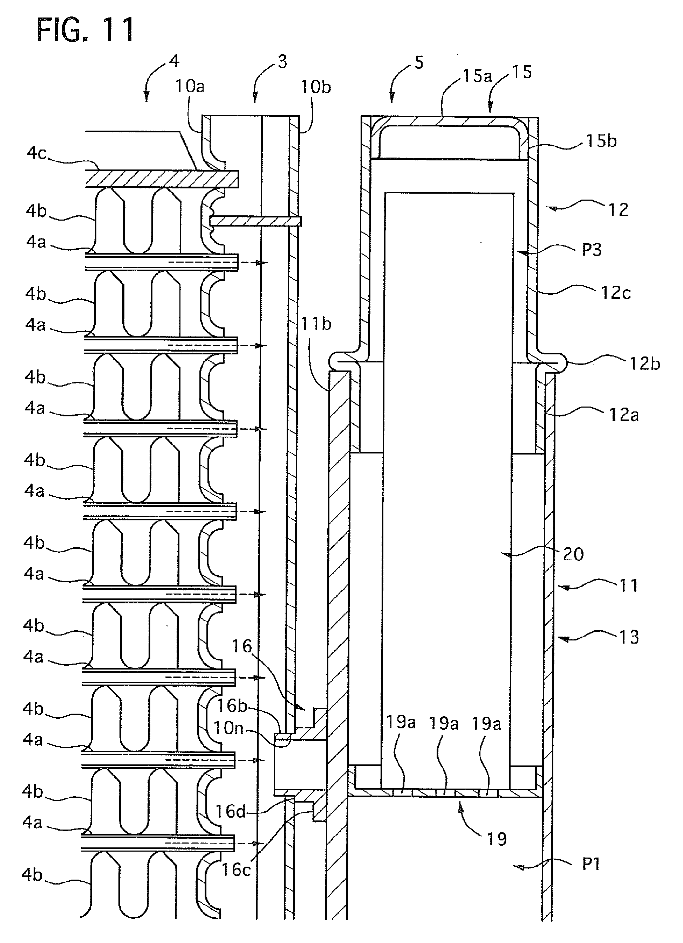

FIG. 11 is a cross sectional side view explaining an upper interior of the receiver tank shown in FIG. 6;

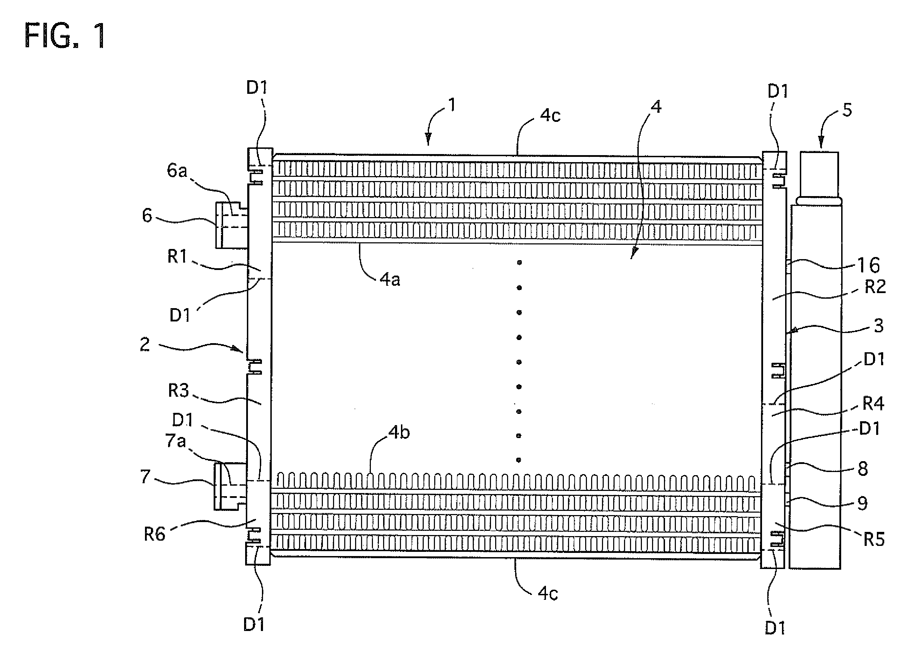

FIG. 1 2 is an exploded view of a metal filter which is used in the heat exchanger of the first embodiment;

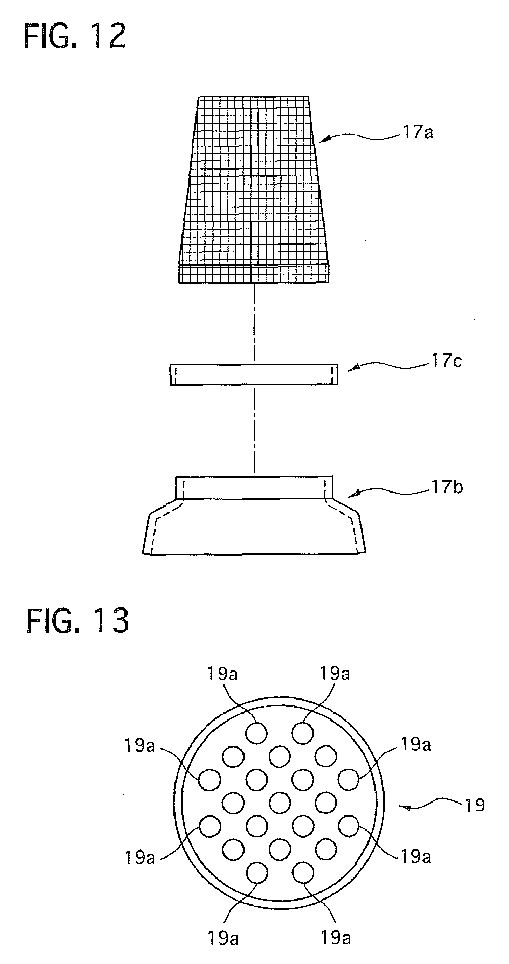

FIG. 13 is a top plain view of a bracket member which is used in the heat exchanger of the first embodiment;

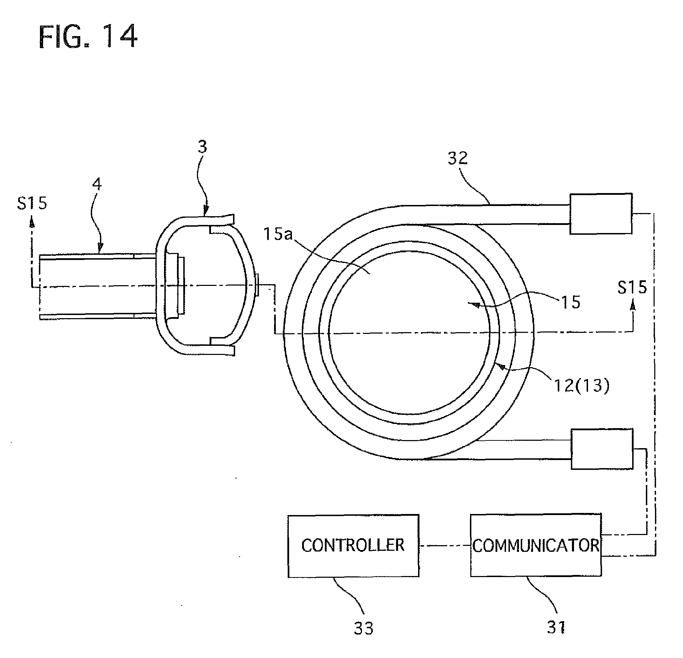

FIG. 14 is a top plain view (A part is omitted.) of a periphery of the block member to explain high-frequency induction heating in the heat exchanger of the first embodiment;

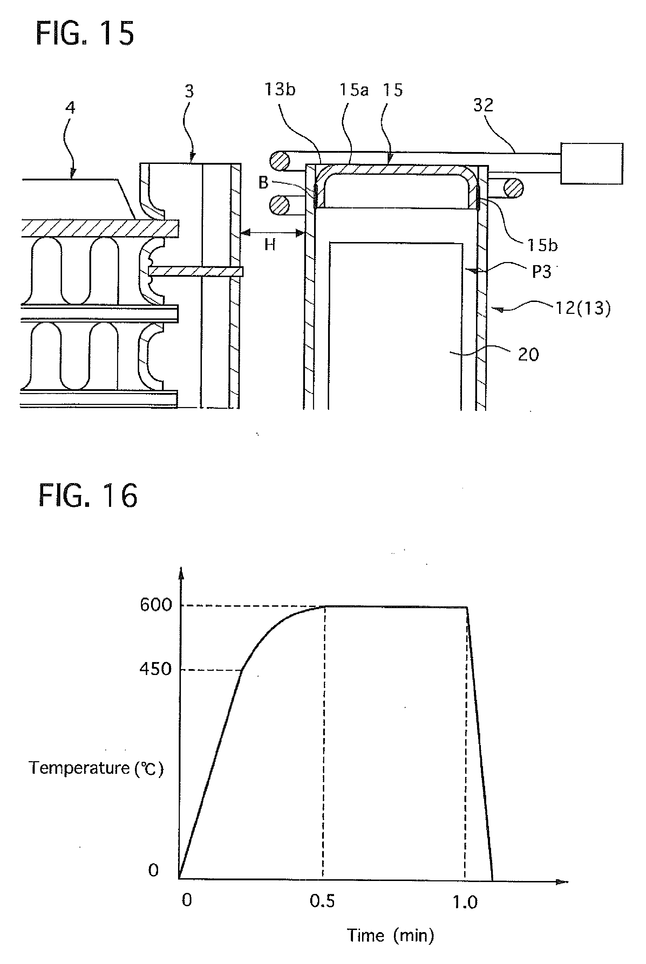

FIG. 15 is a cross sectional view taken along a line S15 - S15 in
FIG. 14;
FIG. 16 is a view explaining a profile of the temperature in the heat exchanger of the first embodiment;
FTG.17 is a view explaining another example of the joining of the block member shown in FIG. 11;

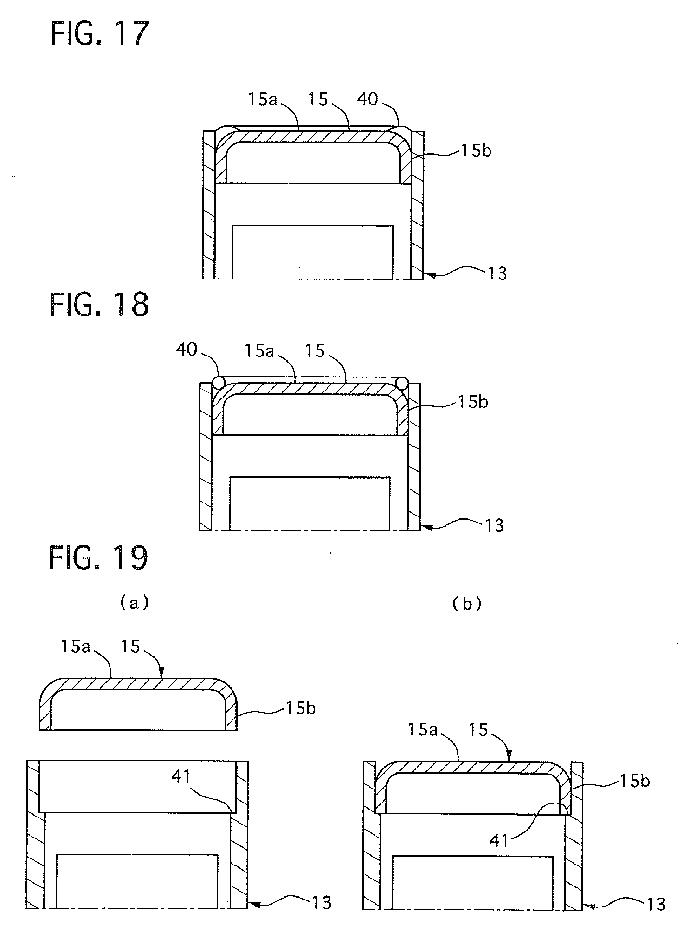

FIG. 18 is a view showing other example of the joining of the block member;
FIG. 19 is a view showing other example of the joining of the block member;

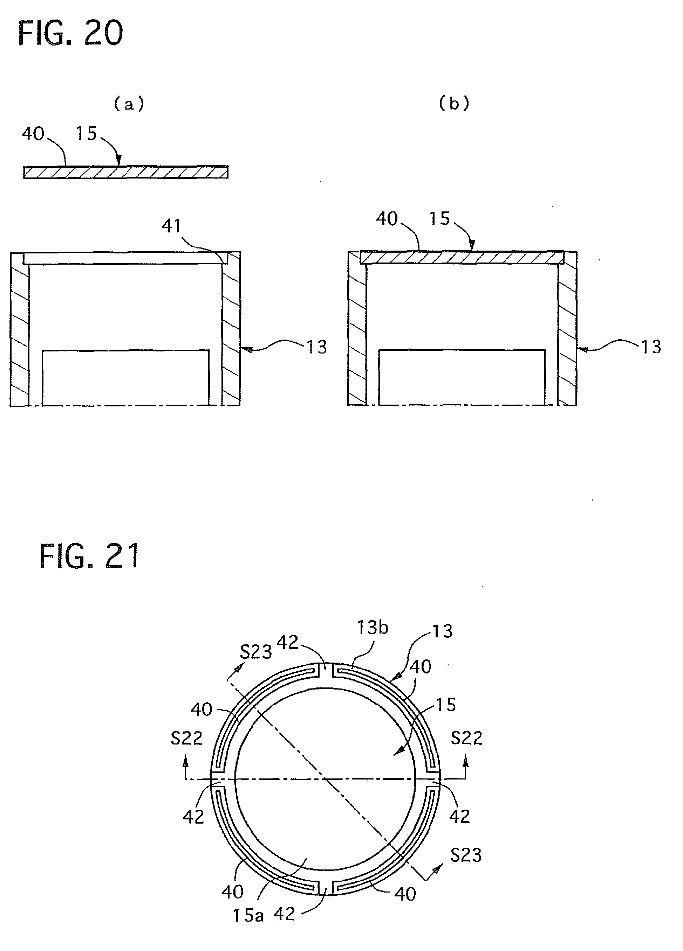

FIG. 20 is a view showing other example of the joining of the block member;
FIG. 21 is a view showing other example of the joining of the block member;

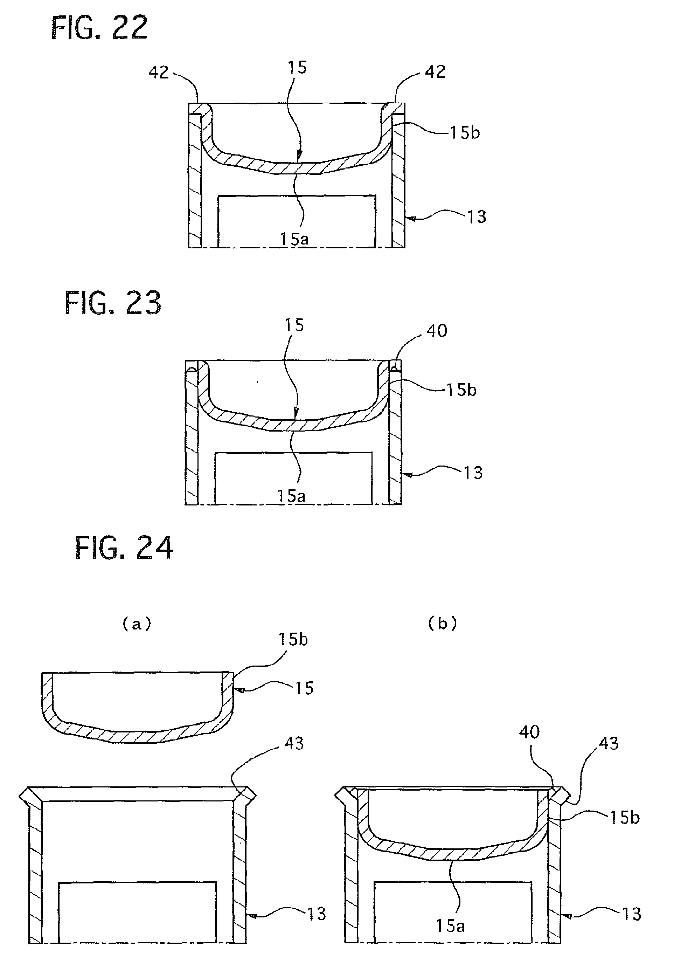

FIG. 22 is a cross sectional view taken along a line S22 - S22 in
FIG. 21 and explaining other example of the joining of the block member;
FIG. 23 is a cross sectional view taken along a line S23 - S23 in FIG. 21 and explaining other example of the joining of the block member;
FIG. 24 is a view explaining other example of the joining of the block member;

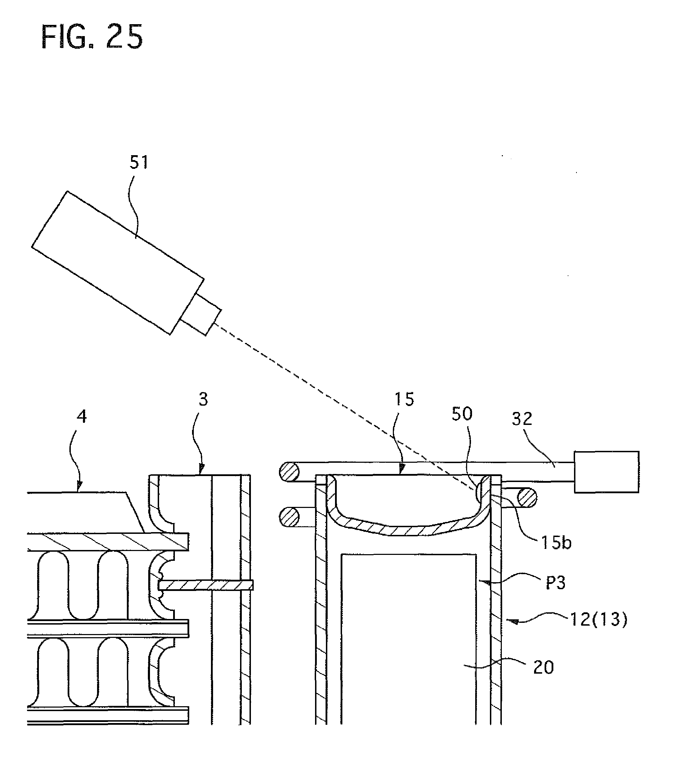

FIG. 25 is a view explaining a high-frequency induction heating process in a heat exchanger manufacturing method of a second embodiment of the present invention;

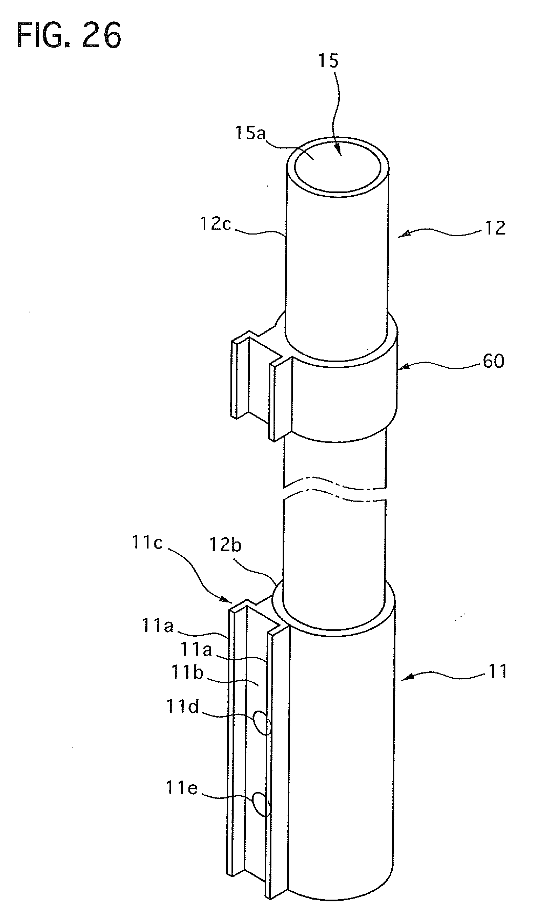

FIG. 26 is a perspective view of a receiver tank which is used in a heat exchanger of a third embodiment according to the present invention;

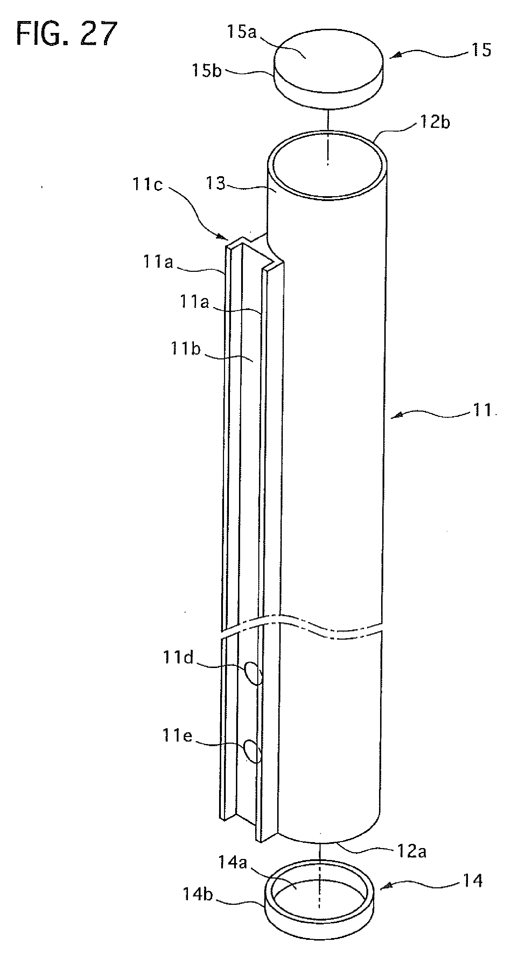

FIG. 27 is an exploded perspective view of a receiver tank which is used in a heat exchanger of a fourth embodiment of the present invention;

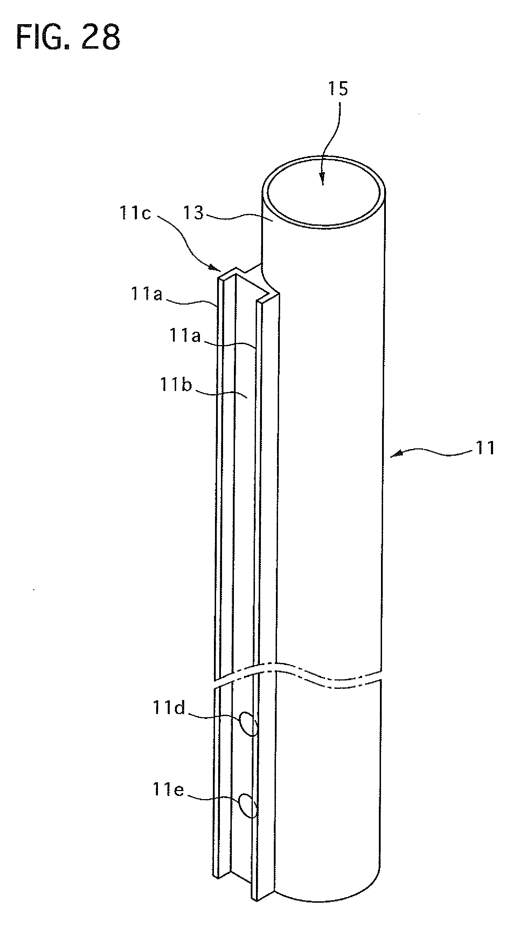

FIG. 28 is an exploded perspective view of the receiver tank shown in FIG. 27;

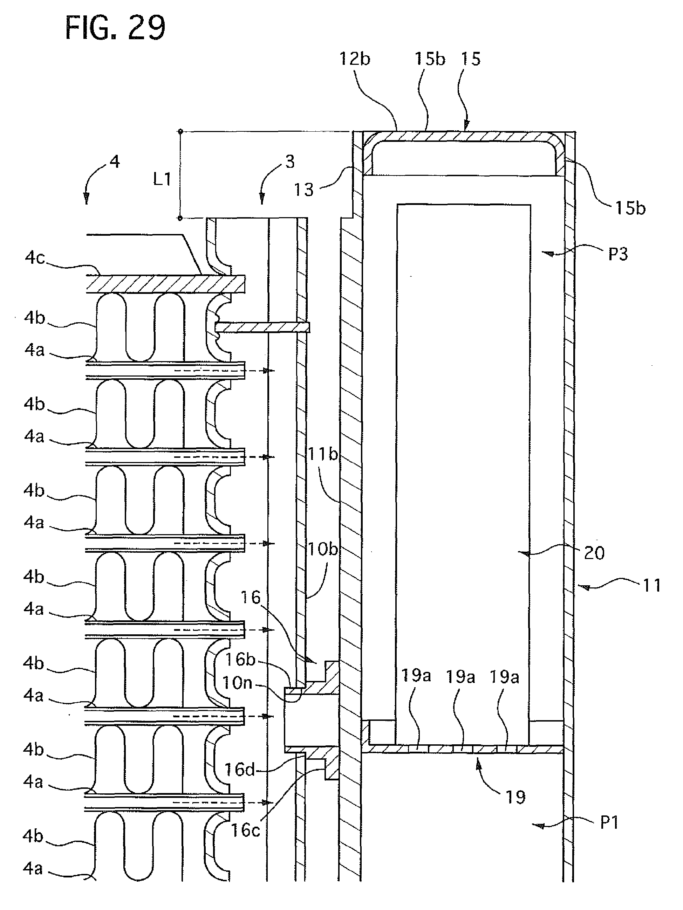

FIG. 29 is a cross sectional side view explaining an upper interior of the receiver tank shown in FIG. 28;

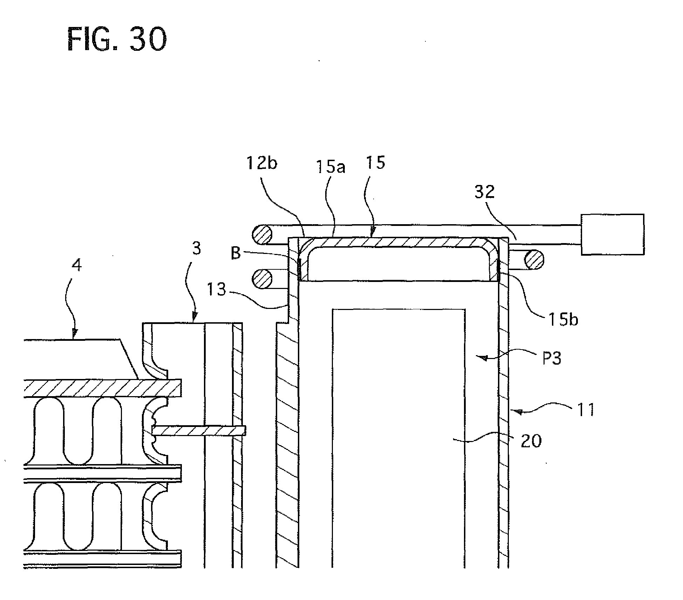

FIG. 30 is a cross sectional view explaining the upper interior of the receiver tank shown in FIG. 28; and

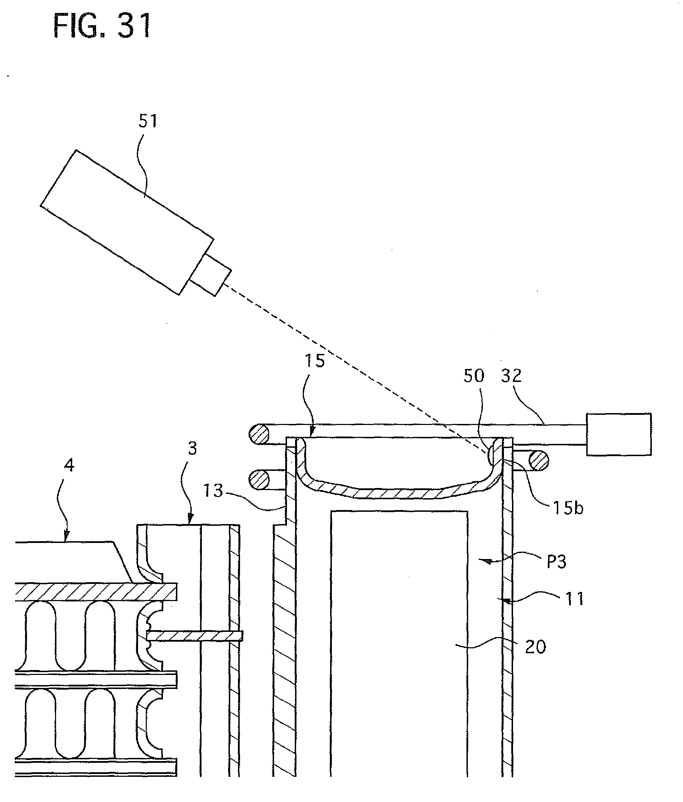

FIG. 31 is a view explaining a high-frequency induction heating process in a heat exchanger manufacturing method of a fifth embodiment of the present invention.

### [DESCRIPTION OF REFERENCE NUMBERS]

- D1: divided plate
- R1 R3 R3, R4, R5, R6, P1, P2, P3: chamber
- 1: heat exchanger
- 2,3: tank
- 4: core part
- 4a: tube
- 4b: fin
- 4c: reinforcement
- 5: receiver tank
- 6: input connector
- 6a: input port
- 7: output connector
- 7a: output port
- 8, 9: intermediate member
- 8a, 9a: communicating hole
- 8b, 9b, 16b: insertion portion
- 8c, 9c, 16c: seat portion
- 8d, 9d, 16d: contact surface
- 8e, 9e: mid portion
- 10a: tube plate
- 10b: tank plate
- 10c: reinforcement hole
- 10d: tube hole
- 10e: bead portion
- 10f: engaging portion
- 10g: projecting portion
- 10i, 10j, 11d, 11e: communicating hole
- 11: first divided member
- 11a: side wall
- 11b: bottom portion
- 11c: fixation portion (restricting portion)
- 11f: caulking portion
- 12: second divided member
- 12a: insertion portion
- 12b: bead portion
- 12c: reduced diameter portion
- 13: main body
- 14,15: block member
- 14a, 15a: bottom portion
- 14b, 15b: insertion portion
- 16: holding member
- 17: metal filter
- 17a: filter main body part
- 17b: flange part
- 17c: metal ring
- 19, 60: bracket member
- 19a: through-hole
- 20: drying agent
- 31: communicator
- 32: work coil
- 33: controller
- 40: brazing filler metal
- 41: cut-off stepped portion
- 42: claw portion
- 43: enlarged portion
- 50: black-body coating material
- 51: infrared temperature sensor

### [BEST MODE FOR CARRYING OUT THE INVENTION]

Hereinafter, embodiments of the present invention will be explained.

### <FIRST EMBODIMENT

Hereinafter, a heat exchanger and its manufacturing method of the first embodiment of the present invention will be described with reference to the accompanying drawing.
FIG. 1 is a front view showing the heat exchanger of the first embodiment,

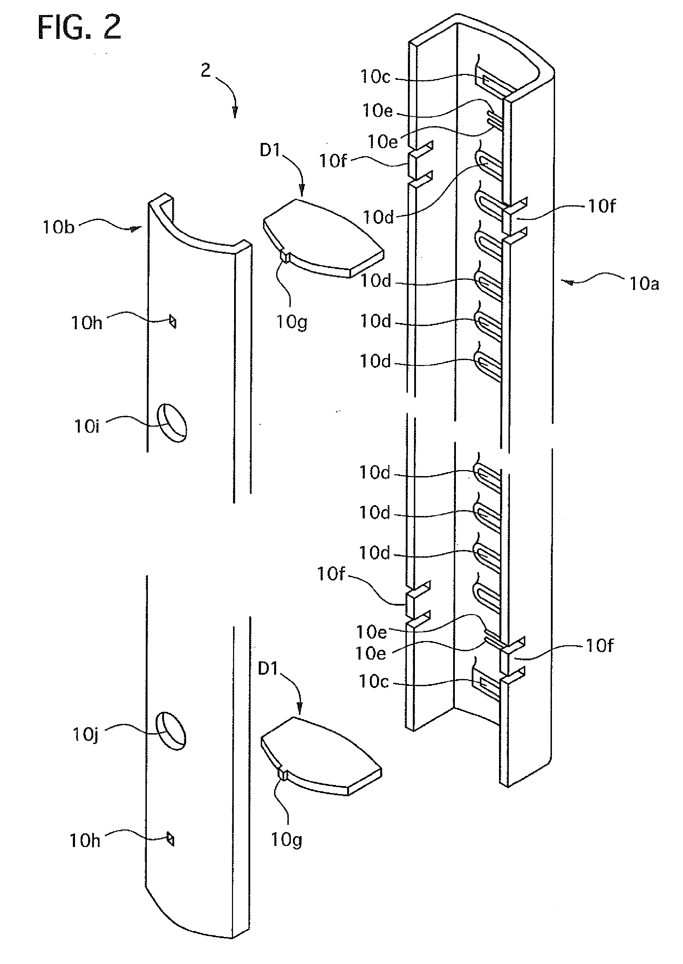

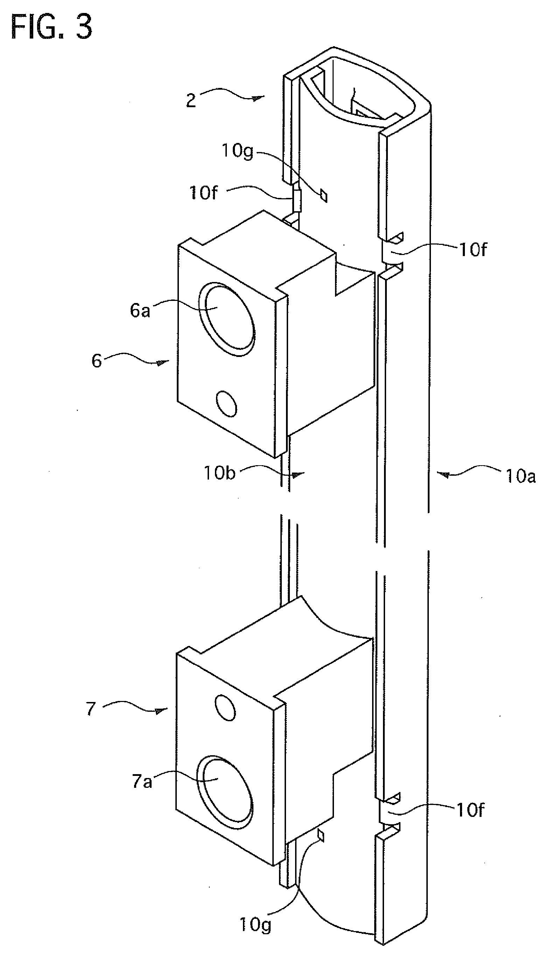

FIG. 2 is an exploded perspective view of a tank that is used in the heat exchanger of the first embodiment, FIG. 3 is a perspective view of the same,

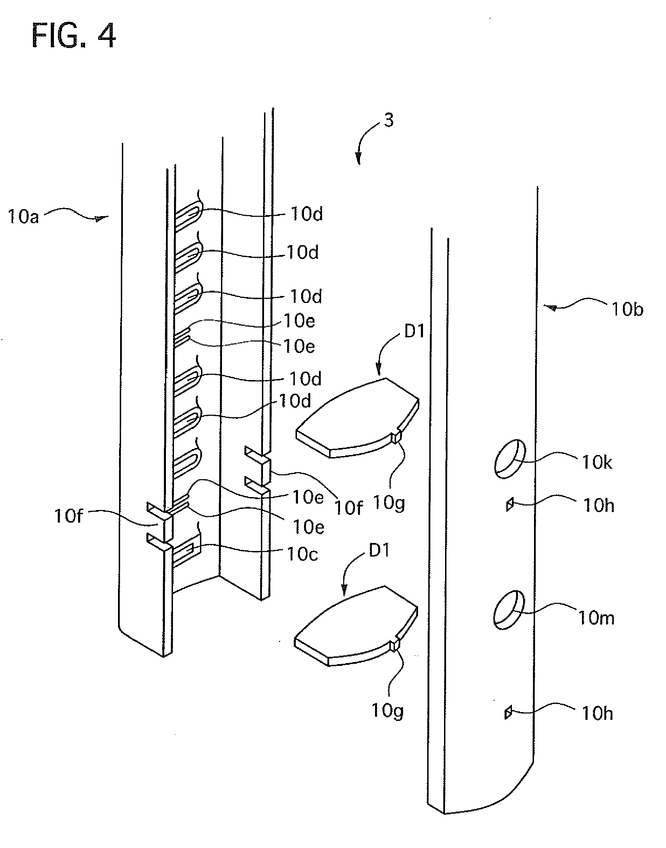

FIG. 4 is an exploded perspective view of the tank shown in FIG. 2 and FIG. 3, and FIG. 5 is a perspective view of the same.

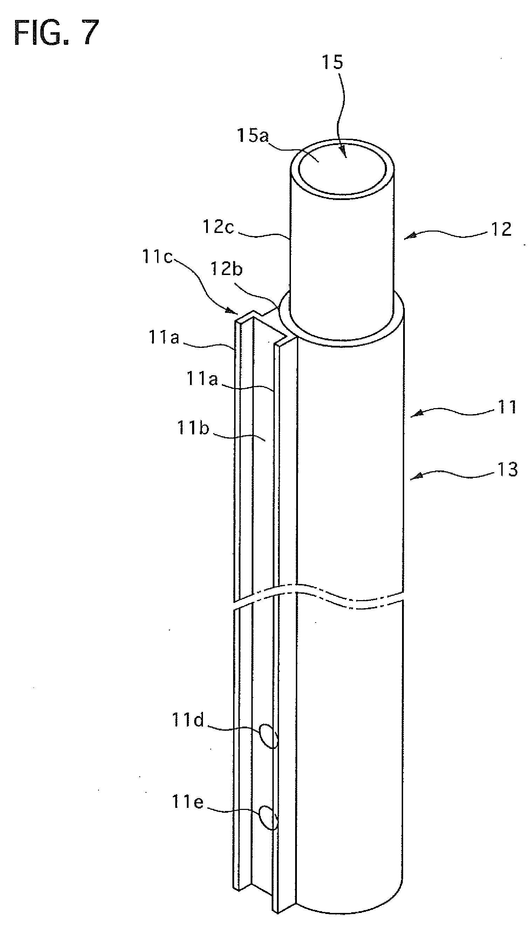

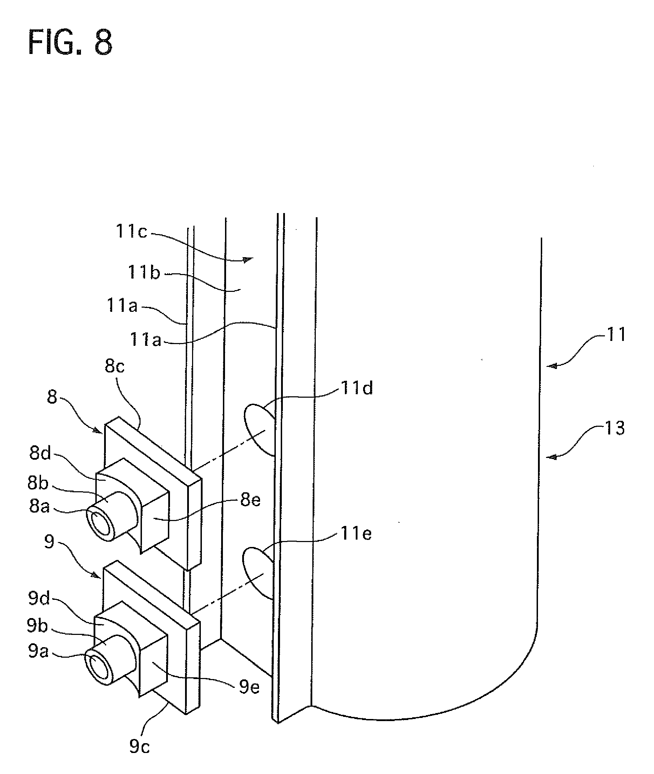

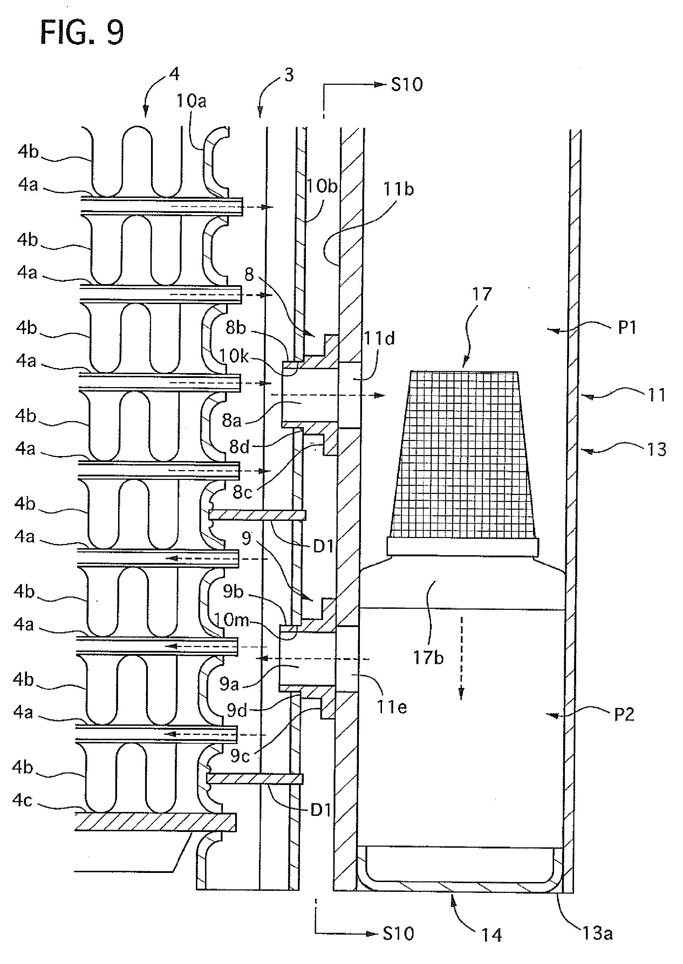

FIG. 6 is an exploded perspective view of a receiver tank that is used in the heat exchanger of the first embodiment, FIG. 7 is a perspective view of the same, FIG. 8 is an exploded perspective view of the receiver tank and intermediate members of the first embodiment, FIG. 9 is a cross sectional side view explaining a lower interior of the receiver tank shown in FIG. 6 and FIG. 7, and FIG. 10 is a cross sectional view taken along a line S10 - S10 in FIG. 9.
FIG. 11 is a cross sectional view explaining an upper interior of the receiver tank shown in FIG. 6 and FIG. 7, FIG. 12 is an exploded view of a metal filter that is used in the heat exchanger of the first embodiment, and FIG. 13 is a top plain view of a bracket member that is used in the heat exchanger of the first embodiment.

FIG. 14 is a top plain view (A part is omitted.) showing a periphery of a block member to explain high-frequency induction heating in the heat exchanger of the first embodiment, FIG. 15 is a cross sectional view taken along a line S15 - S15 in FIG. 14, and FIG. 16 is a view explaining a profile of the temperature in the heat exchanger of the first embodiment.
FIG.17 -21 are views explaining other example of the joining of the block member, FIG. 22 is a cross sectional view taken along a line S22 - S22 in FIG. 21 to explain other example of the joining of the block member, FIG. 23 is a cross sectional view taken along a line S23 - S23 in FIG. 21 to explain other example of the joining of the block member, and FIG. 24 is a view showing other example of the joining of the block member.

First, an entire construction of the heat exchanger of the first embodiment will be described.
As shown in FIG. 1, the heat exchanger 1 of the first embodiment includes a pair of tanks 2 and 3 that are arranged a predetermined distance apart from each other in a left and right direction, a core part 4 that is arranged between the pair of tanks 2 and 3, a long receiver tank 5 that is arranged along and adjacently to the tank 3, and others.
The tank 2 has three chambers R1, R3 and R6 that are defined by four divided plates D1 formed like a plate, and there is provided an input connector 6 with an inlet port 6a that communicates with the chamber R1, while there is provided an output connector with an outlet port 7a that communicates with the chamber R6.
The tank 3 has three chambers R2, R4 and R5 that are defined by four divided plates D1, and there is provided the receiver tank 5 that communicates with the chambers R4 and R5 through intermediate members 8 and 9.

As shown in FIG. 2, the tank 2 consists of a tube plate 10a shaped in a half-tube having a cross section like a letter U, a tank plate 10b shaped in a half-tube having a cross section like a letter U and coupled with the tube plate 10a like a box, and the above-described divided plates D1 attached on inner sides of the both plates 10a and 10b. The tube plate 10a is formed with reinforcement holes 10c and tube holes 14d so that they are formed like a circular projection projecting inward by a burring process. The end portions of reinforcements 4c, which will be later described, are inserted through the reinforcement holes 10c and they are fixed to the tube plate 10a. The end portions of the tubes 4a, which will be later described, are inserted through the tube holes 10d and they are fixed to the tube plate 10a.
In addition, at each position of the tube plate 10a where the divided plate D1 are attached, a pair of bead portions 10e and 10e are projected inward so that they can fix the core part (4) sides of the divided plates D1 in a state they sandwich the core part sides thereof.
Further, on side walls of the tube plate 10a facing each other, being shaped like the U-letter shape, a plurality of pairs of engagement portions 10f and 10f shaped like a claw are formed along a longitudinal direction of the tube plate 10a so as to be caulked with and fixed to portions of an outer circumference of the tank plate 10b.
Incidentally, the configuration, the formation number, the formation positions and others of the engagement portions 10f and 10f may be set appropriately.

On the other hand, at the positions of the tank plate 10b where the divided plates D1 are attached, fixation holes 10h are formed so that projecting portions 10g formed on the divided plates D1 can be inserted therein and fixed thereto.
In addition, at the positions of the tank plate 10b where the connectors 6 and 7 are fixed, circular communicating holes 10i and 10j are formed, respectively.

In addition, as shown in FIG. 3, the divided plates D1 are placed at predetermined positions and then the both plates 10a and 10b are coupled with each other like a box. The engagement portions 10f and 10f are caulked and fix with the tank plate 10b, so that the tank 2 is constructed to be capable of being temporally assembled.
Further, the connectors 6 and 7 and the tank plate 10 are constructed to be capable of being temporally assembled in a state where the connectors 6 and 7 are contacted with the tank plate 10b, where they are caulked and fixed with circular projecting portions that are formed like a circular projection by the respective communicating holes 10i and 10j of the tank plate 10b being formed by the burring process so as to project outward in advance before the both plates 10a and 10b are coupled with each other.

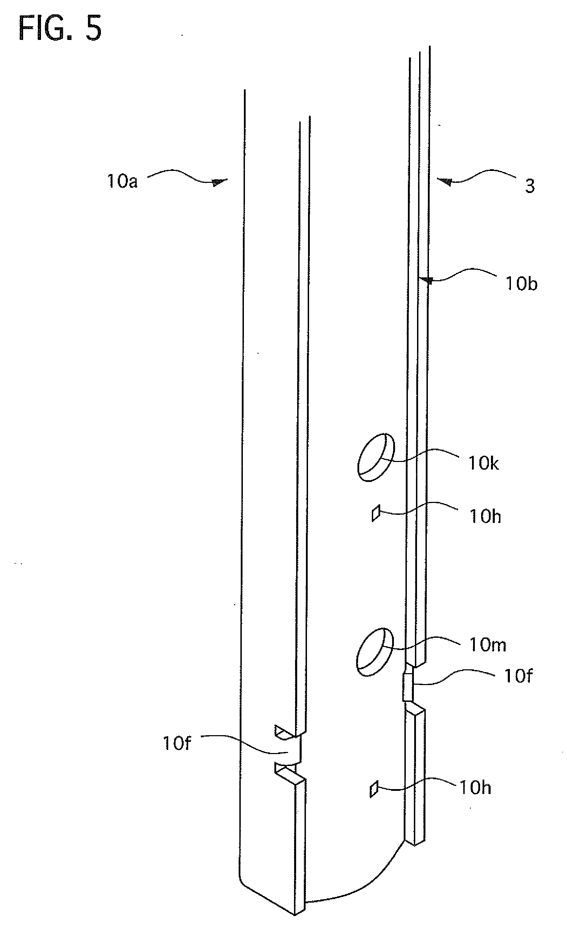

As shown in FIGS. 4 and 5, the tank 3 is constructed to be capable of being temporally assembled, as well as the tank 2, in such a way that the engagement portions 10f and 10f are caulked and fixed with the tank plate 10b after the both plates 10a and 10b are coupled with each other like a box in a state where the divided plates D1 are placed at the certain positions.
In addition, at the positions of the tank plate 10b where intermediate plates 8 and 9 are fixed, circular communicating holes 10k and 10m are formed. Further, on the position where a holding member 16, which will be later described, is fixed, communicating hole 10n is formed (refer to FIG. 11).

The core part 4 includes a plurality of flat tubes 4a and corrugated fins 4b, where the both end portions of tubes 4a are inserted in and fixed to the tube holes 10d of the tanks 2 and 3 and wave top portions of the fins 4b are contacted with the adjacent tubes 4.
In addition, the both sides in a layer direction of the core part 4 are connected with and reinforced by a pair of reinforcement 4c and 4c where the both end portions thereof are inserted in and fixed to the reinforcement holes 10c of the tanks 2 and 3.

As shown in FIGS. 6 and 7, the receiver tank 5 includes a main body 13 and block members 14 and 15, where the main body 13 consists of a first divided member 11 and a second divided member 12 that are shaped like a circular cylinder and connected with each other, and the block members 14 and 15 are formed like a dish and block both opening end portions of the main body 13. On an outer peripheral portion of the first divided member 11, a fixation portion 11c are formed along the first divided member 11 over the entire length thereof, having a cross section shaped like a letter U opening toward the intermediate members 8 and 9. The fixation portion 11c has a pair of side walls 11a and 11a that extend along a center of axis of the first divided member 11 to face each other, and a flat bottom portion 11b that is provided between the side walls 11 a and 11 a perpendicular to the side walls.
In addition, at the position of the bottom portions 11b where the intermediate members 8 and 9 are fixed, circular communicating holes 11d and 11e are formed, respectively.
Incidentally, at least the first divided member 11 is formed as one unit by an extrusion process of raw material.

On the other hand, the second divided member 12 includes an insertion portion 12a having the same outer diameter as an inner diameter of an upper end portion of the first divided member 11, and a reduced diameter 12c having an outer diameter reduced to a predetermined outer diameter adjacently to a circular bead portion 12b that is formed to project outwardly from the insertion portion 12a.

The block member 14 is formed to have a bottom portion 14a shaped like a disc, and an insertion portion 14b that is formed like a circular projection projecting from an outer circumferential portion of the bottom portion 14a toward the main body 13 to be insertable in and engageable with an inner circumferential portion of the lower opening end portion 13a of the main body 13 (the first divided member 11).

The block member 15 is formed to have a bottom portion 15a shaped like a disc, and an insertion portion 15b that is formed like a circular projection projecting from an outer circumferential portion of the bottom portion 15a toward the main body 13 to be insertable in and engageable with an inner circumferential portion of the upper opening end portion 13b of the main body 13 (the second divided member 12).

In addition, as shown in FIG. 7, an insertion portion 12a of the second divided member 12 is inserted into the inner circumference of the upper end portion of the first divided member 11, and then the bead portion 12b is contacted with the upper end portion of the first divided member 11, so that the both divided members 11 and 12 can be connected and fixed with each other.
In addition, the both block members 14 and 15 are pressed in the inner sides of the upper and lower opening end portions 13a and 13b, respectively, and the bottom portions 14a and 15a are fixed in a state they are in plane with the end portions 13a and 13b.

Accordingly, in a main body 13 of the receiver tank 13, the diameter of an upper opening end portion 13b of the main body 13 is reduced because that of the diameter-reduced portion 12c of the second divided member 12 is reduced.

As shown in FIGS. 8 to 10, the intermediate members 8 and 9 are used to communicatably connect the communicating holes 10k and 10m with the respective communicating holes 11d and 11e of the receiver tank 5 and to fix the receiver tank 5 to the tank 3. The intermediate member 8 (9) is provided with a communicating hole 8a (9a), an insertion portion 8b (9b) and a seat portion 8c (9c) as shown in FIG. 8. The communicating hole 8a (9a) is formed to have a circular opening cross section, being penetrated. The insertion portion 8b (9a) is shaped like a cylinder to project on a tank (3) side so as to extend a length of the communicating hole 8a (9a). The seat portion 8c (9c) is shaped like a rectangle and provided at the receiver tank (5) side.

In addition, between the insertion portion 8b (9b) of the intermediate portion 8 (9) and the seat portion 8c (9c), there is formed with a mid portion 8e (9e) having a contact surface 8d (9d) to fit an outer circumferential configuration of the tank plate 10b of the tank 3. Incidentally, the opening diameter of the communicating hole 11d (11e) of the fixation portion 11c is set larger in some degree than that of the communicating hole 8a (9a).

Further, as shown in FIG. 9, the intermediate portion 8 (9) is fixed in a state where the insertion portion 8b (9b) is inserted into the communicating hole 10k (10m) of the tank 3 so that the contact surface 8d (9d) is contacted with the tank plate 10b of the tank 3 and the seat portion 8c (9c) is contacted with the bottom portion 11b of the fixation portion 11c.
This enables the tank 3 (the communicating holes 10k and 10m) to be communicatably connected with the receiver tank 5 (the communicating holes 11d and 11e).

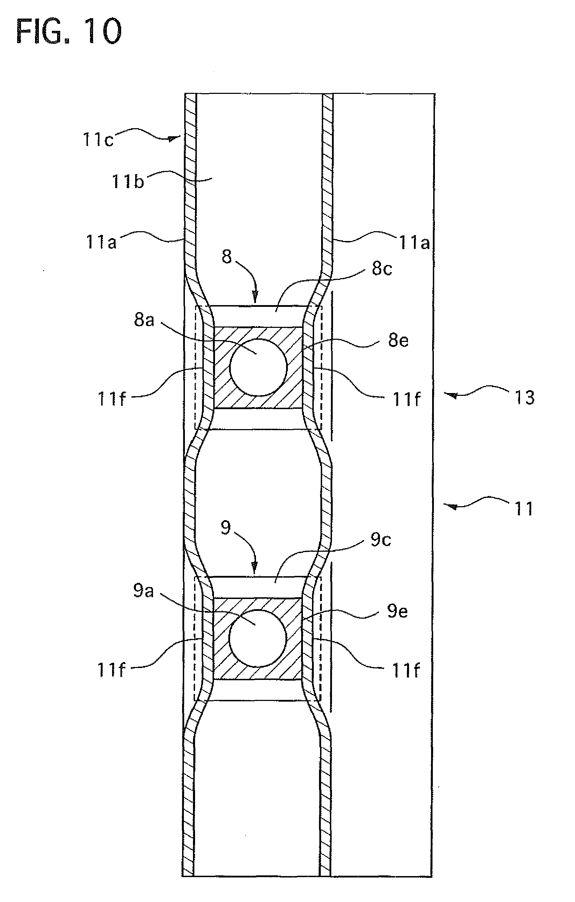

In addition, as shown in FIG. 10, the maid portion 8e (9e) and the seat portion 8c (9c) of the intermediate member 8 (9) are fixed by a pair of caulking portions 11f that are formed by the both side walls 11a and 11a being caulked inward.
Incidentally, the configuration, the formation number, the formation position and others of the caulking portion 11f may be set appropriately, and a positioning construction without using caulking maybe employed.

Further, as shown in FIG. 11, the first divided plate 11 is provided near the mid portion with a holding member 16 having the same configuration as that of the intermediate member 8 (9).
In the holding member 16, as well as the intermediate members 8 and 9, the insertion portion 16b is inserted into the communicating hole 10n of the tank 3 so that the contact surface 16d is contacted with the tank plate 10b of the tank 3 and the seat portion 16c is fixed in a state where it contacts with the bottom portion 11b of the fixation portion 11c.
Further, not shown in the drawings, the holding member 16 is fixed by a pair of caulking portions 11f as well as the intermediate members 8 and 9. This enables the receiver tank 5 to be supported in a stable state on the tank 3 through the intermediate portions 8 and 9 and the holding member 16.

As shown in FIG. 9, a metal filter 17 is provided between the communicating hole 11d and the communicating hole 11e in the divided member 11. As shown in FIG. 12, the metal filter 17 consists of a filter main body part 17a, a flange part 17b and a metal ring 17c.
The filter main body part 17a has pores like a mesh and it is formed like a circular cylinder having a bottom portion and opened below.
The flange part 17b is formed like a circular cylinder in which its diameter increases toward the lowest portion, and the inner diameter of the upper end portion is formed to be slightly smaller than the inner diameter of the lower end portion of the filter main body part 17a.
The metal ring 17c is formed like a circular cylinder, and the inner diameter thereof is formed to be slightly larger than the outer diameter of the lower end portion of the filter main body part 17a.
Thus, the inner side of the lower end portion of the filter main body part 17a is overlapped with the upper end portion of the flange portion 17b, so that these three parts are fixed to one another.

Further, as shown in FIG. 9, the metal filter 17 is fixed by press-in between the communicating hole 11d and the communicating hole 11e inside of the main body 11.
Accordingly, a chamber P1 is formed in the receiver tank 5 to communicate with the chamber R4 of the tank 3 through the communicating hole 8a of the intermediate member 8.
In addition, a chamber P2 is formed to communicate with the chamber P1 through the filter main body part 17a of the metal filter 17 and also to communicate with the chamber R5 of the tank 3 through the communicating hole 9a of the intermediate member 9.

On the other hand, as shown in FIG. 11, near the upper end portion of the first divided member 11, there is provided a bracket member 19 with a plurality of through-holes 19a (also refer to FIG. 13).
This bracket member 9 forms a chamber P3 at an upper position of the main body 13, which communicates with the chamber P1 through the through-hole 19a and contains a reception member 20.
The reception member 20 in the heat exchanger 1 of the first embodiment is a drying agent, which is contained in a breathable cloth sack in a state of particles. This structure is not limited, large drops of the drying agent may be contained directly in the chamber P3.
In addition, a fluorescent agent may be contained instead of the drying agent.

Besides, each construction member, except the reception member 20, of the heat exchanger 1 of the first embodiment is made of aluminum, or alloy mainly containing aluminum, stainless and so on.
Further, at least one side of contact portions of each construction member to be joined is provided with a brazing sheet, or brazing filler material where flux is coated or pasted in advance.

Next, the operation of the heat exchanger and its manufacturing method of the first embodiment will be described.
In order to manufacture the heat exchanger 1 like this, first, the entire of the heat exchanger 1 is temporally assembled.
In this case, in order to temporally assemble the receiver tank 5 with the tank 3, first, the both divided member 11 and 12 are joined to temporally assemble the main body 13, and then the metal filter 17 and the bracket member 19 are inserted and arranged in the interior thereof as shown FIG. 9 and FIG. 11.

Subsequently, the block member 14 is pressed from a lower side to be fixed to the lower opening end portion 13a of the main body 13.

Next, the intermediate members 8 and 9 and the holding member 16 are inserted and arranged inside of the fixation portion 11c as shown in FIG. 9 and FIG. 11, and then the both side walls 11a and 11a are caulked to form the caulking portions 11f and 11f refer to FIG. 10).
In this case; the both side walls 11a and 11a contact with the side surfaces of the seat portions 8c and 9c of the intermediate members 8 and 9 to guide the intermediate members 8 and 9, so that the intermediate members 8 and 9 can be precisely positioned in a front and rear direction thereof (a width direction of the core part 4).
In addition, the seat positions 8c and 9c and the mid portions 8e and 9e of the intermediate members 8 and 9 are fixed by the respective caulking portions 11f and 11f, thereby the seat portions 8c and 9c of the intermediate portions 8 and 9 being held in a state where they adhere tightly to the both side walls 11a and 11a and the bottom portion 11b.

This caulking provides a relative positioning between the intermediate members 8 and 9 and the fixation portion 11c, and the intermediate members 8 and 9 are temporally fixed to the fixation portion 11c in a state where the communicating holes 8a and 9a and the communicating holes 11d and 11e are positioned relatively to each other.
Further, the opening diameter of the communicating hole 11d (11e) is set slightly larger than that of the communicating hole 8a (9a), so that some relative displacement in a vertical direction therebetween can be allowed. Similarly, the holding member 16 can be temporally fixed in a state where the holding member 16 and the fixation portion 11c are positioned relatively to each other.

Next, the insertion portions 8b and 9b of the intermediate members 8 and the insertion portion 16b of the holding member 16 are inserted in the communicating holes 1k, 10m, 10n of the tank 3, respectively, and they are fixed with each other, all together with the receiver tank 5, so that the receiver tank 5 is temporally assembled with the tank 3.
Thus, the temporally assembling of all the construction members of the heat exchanger 1 is finished except the block member 15 and the reception member 20.

Next, the thus temporally assembled heat exchanger 1 is heat-processed in a heating furnace, thereby the portions of construction members to be joined being brazed to be integrally formed.

The brazing process of the heat exchanger 1 is normally carried out in a state where the core part 4 is placed in a state it is horizontally laid.
As a result, a weight of the receiver tank 5 acts on the intermediate members 8 and 9 in the vertical direction, so that the relative displacement therebetween becomes large with high possibility especially in the width direction of the core part 4.
Incidentally, the relative displacement between the intermediate members 8 and 9 and the receiver tank 5 causes a problem in that pressure loss of flowing medium increases due to the displacement between the communicating hole 8a (9a) and the communicating hole 11d (11).
As its conventional measures, the open diameter of the communicating hole 11d (11e) is set slightly larger than that of the communicating hole 8a (9a) so as to allow the displacement therebetween, but the setting the opening diameter of the communicating hole 11d (11e) too large causes a problem in that a sufficient joint area of the intermediate member 8 (9) and the receiver tank 5 cannot be assured, which brings the increase in size of the intermediate members 8 and 9 and deterioration in brazing.

In order to solve the above-described problem, in the heat exchanger 1 of the first embodiment, the both side walls 11 a and 11a are contacted with the side surfaces of the seat portions 8c and 9c of the intermediate members 8 and 9, and then the seat portions 8c and 9c are fixed by the caulking portions 11f and 11f.
Accordingly, there is no possibility in the displacement of the intermediate members 8 and 9 in the brazing process, and these members can be brazed in a state where they are nicely positioned.
In addition, the positioned state is maintained after the brazing process, and thereby it improves the joint durability, consequently improving the durability of the heat exchanger 1.

Incidentally, the first divided member 11 and the second divided member 12 can be nicely joined by providing a brazing filler material ring containing flux (flux cored wire) between the upper end portion of the first divided member 11 and the bead portion 12b of the second divided member 12.

Next, as shown in FIG. 11, the reception member 20 is inserted and arranged in the chamber P3 through the upper opening end portion 13b of the main body 13 of the receiver tank 5.

Next, the block member 15 is fixed by press in the upper opening end portion 13, the high-frequency induction heating method is executed to braze a contact portion (hereinafter referred to as a joint portion B of the block member 15, and indicated by a heavy line in FIG. 15) between the outer circumference of the insertion portion 15b of the block member 15 and the inner circumference of the upper opening end portion 13b of the main body 13.

Incidentally, the high-frequency induction heating method is similar to technology described in Japanese Patent Application Publication No. 07-9119 and Japanese Patent Application Publication No. 06-295782, so that its contents will be briefly described.
Specifically, the high-frequency induction heating method uses the phenomenon in that conductive material (current carrying material) placed in a work coil where high-frequency current runs is rapidly heated by the heat generation due to the overcurrent loss generated in the conductive material under the electromagnetic induction operation and the heat generation due to the hysteresis loss (heat quantity generated due to vibration and friction of each molecule in magnetic material by alternate current magnetic flux).

As shown in FIG. 14 and FIG. 15, in the first embodiment, not-shown brazing filler material (brazing sheet) is provided on the outer surface of the block member 15.
In addition, the work coil 32 shaped like a loop and electrically connected to a communicator 31 is arranged to surround the circumference of the joint portion B of the block member 15.
Incidentally, the work coil 32 may be a single-loop one shaped like Ω, not a multi-loop one.
In addition, the communicator 31 is electrically connected to a controller 33.
The rewritable memory of the controller 33 stores a control method of the communicator 31 as program, and the controller 33 executes the program to output a command signal to the communicator 31 to output high-frequency current, thereby controlling heat adjustment of the joint portion B.

Incidentally, the controller 33 previously stores data on a relationship between an elapsed time from heating start-time and a target temperature at the joint portion B of the block member 15 as shown in FIG. 16, and it outputs the command signal setting the target temperature to the communicator 31.
Thus, it controls temperature rising at the joint portion B of the block member 15, realizing stable jointing by brazing.

The high-frequency current runs in the work coil 32 from the communicator 31 when the controller 33 outputs the command signal. The joint portion B of the block member 15 arranged in the work coil 32 is heated, and thereby the brazing filer metal on the joint portion is melted. This brazing process provides nice jointing of the block member 15 and the second divided member.
Incidentally, in this process, as the outer surface of the bottom portion 15a of the block member 15 and the outer surface of the insertion portion 15b are connected with each other through a gently curved surface, a part of the brazing filler material on a portion relatively apart from the joint portion B surely flows in and fills the joint portion B, namely between the outer circumference of the insertion portion 15b and the inner circumference of the upper opening end portion 13b of the main body 13 in the block member 15, due to the capillary phenomenon.

In the prior invention, in a case where the block member 15 is jointed with the receiver tank 5 by welding for example, the workability in welding is not good and the heat generated during welding might have a harmful efect on the tank 3 because the receiver tank 5 is very near the tank 3.
In addition, in a case of the brazing process by using the high-frequency induction heat generated in the work coil 32, a certain clearance cannot be set between the work coil 32 and the main body (accurately the joint portion B of the block member) and might cause deterioration in brazing. Incidentally, the certain clearance is an import item for setting in the high-frequency induction heating, too.
Alternatively, even in a case where the certain clearance can be set between the work coil 32 and the main body, as the work coil is very near the tank 3, the heat generated during the high-frequency induction heating might melt the brazing filler material on the joint portion of the tank 3.

On the contrary, in the heat exchanger of the first embodiment, as described above, the upper end portion side of the receiver tank 5 is reduced in diameter because it is the reduced diameter portion 12c of the second divided member 12. Accordingly, a sufficient clearance H can be assured between the main body 13 (the reduced diameter portion 12c) and the tank 3 near the joint portion B of the block member 15.
Thus, a work space for sufficiently jointing can be assured by ensuring the certain clearance between the work coil 32 and the main body 13 (the joint portion of the block member 15).
In addition, the work coil 32 does not excessively approach the tank 3, and there is no possibility of a harmful effect of the heat generated during the high-frequency induction heating on the tank 3, so that the tank 3 can be protected.

In addition, as the reduced diameter portion 12c of the second divided member 12 is reduced in diameter, the heat mass of the main body 13 can be decreased, thereby the smooth rising of the temperature being obtained at the joint portion of the block member 15.
Further, the joint area of the joint portion of the block member 15 can be decreased, and the usage of brazing filler material can be also decreased to decline in cost and shorten the amount of the time for jointing.
Further, the joint area of the joint portion of the block member 15 is decreased, which assures high shelter density (high pressure tightness).

In addition, the control of the communicator 31 by the controller 33 adjusts the temperature rising of the joint portion of the block member 15 to obtain stable jointing by brazing.

Thus, in the heat exchanger 1 of the first embodiment, the block member 15 can be nicely jointed by brazing with the upper opening end portion 13b of the main body 13, so that very high pressure tightness can be obtained relative to a pressure-tightened structure of the block member using a seal member and a twisted groove.
Incidentally, the block member 15 is joined by brazing under the high-frequency induction heating with the upper portion of the main body 13 in the heat exchanger of the first embodiment, while welding may be replaced. In this case, the similar operation and effects can be obtained.

### <As to the joint portion of the block member>

Next, a configuration of the joint portion B of the block member 15 will be described with reference to FIGS. 17 to 24.
Incidentally, in FIGS. 17 to 24, the brazing filler material 40 flows in the joint portion B of the block member 15 due to the capillary phenomenon to joint by brazing, although their drawings and explanations are omitted.

As shown in FIG. 17, a powdery brazing filler material 40 is placed near the upper portion of the joint portion B of the block member 15, on which the flux may be coated, to joint by brazing. Alternatively, as shown in FIG. 18, the jointing by brazing may be carried out after providing a brazing filler material ring containing flux (flux cored wire).

Further alternatively, as shown in FIG. 19(a), the inner circumference of the upper opening end portion 13b of the main body 13 may be formed with a circular cut-off stepped portion 41, with which the insertion portion 15b of the block member 15 is engaged as shown in FIG. 19(b), to easily determine an insertion margin needed when the block member 15 is pressed into the main body 13.

Further alternatively, as shown in FIG. 20(a), the inner circumference of the upper opening end portion 13b of the main body 13 may be formed with a circular cut-off stepped portion 41, with which the block member 15 shaped like a dish is engaged as shown in FIG. 20(b).
Thus, the insertion margin needed for pressing the block member 15 into the main body 13 can be easily determined, and the block member 15 can be decreased in weight and size, the chamber P3 can be enlarged (enlargement of the reception member 20), and the heat mass can be decreased, and so on.
In this case, the brazing filer material 40 is provided on the outer surface of the block member 15.

Further alternatively, as shown in FIGS. 21 to 23, the insertion portion 15b of the block member 15 may have a depression formed by being bent toward the main bode (13) side and provided with claw portions 42 to be engaged with the upper end portion of the main body 13 at a plurality of positions of the outer circumference thereof.
Then, the brazing filler material 40 may be placed on the upper opening end portion 13b of the main body 13 except the claw portions 43, and they are joined by brazing similarly.

Further alternatively, as shown in FIG. 24(a), the insertion portion 15b of the block member 15 may have a depression formed by bending toward the main bode (13) side and provided with an enlarged portion 43 enlarged outward by flaring.
Then, the brazing filler material 40 may be placed on the inner side of the enlarged portion 43 to join by brazing similarly to the previous case. In this case, the brazing filler material 40 can be positively conducted toward the joint portion of the block member 15 due to a slanted surface of the enlarged portion 43.

### <As to the pressure tightness of the receiver tank>

As the receiver tank 5 of the heat exchanger 1 is fixed by brazing with the block member 15, the pressure tightness thereof can be greatly improved relative to the conventional heat exchangers.
In addition, as the joint area of the joint portion of the block member 15 is decreased, the shelter density (the pressure tightness) thereof can be set higher. Therefore, the reliability of products can be improved.
Further, it can be applied to a cooling circuit for vehicle interior air-conditioning where the high-pressured CO₂ is a flowing medium.

### <As to design freedom of the interior of the receiver tank>

In the heat exchanger 1 of the embodiment 1, a fixation portion 11c is formed on the outer circumference of the receiver tank 5 (the first divided member 11), and the fixation potion 11c fixes the seat portions 8c and 9c, functioning as the joint portion of the intermediate portions 8 and 9 and the receiver tank 5, so as to communicatably connect therebetween.
Thus, there is no possibility of nearness and contact of the seat portions 8c and 9c and the reception member in the receiver tank 5, where the seat portions 8c and 9c function as the joint portion B of the intermediate members 8 and 9 and the receiver tank 5. Therefore, the design freedom of the interior of the receiver tank 5 can be enlarged.
Accordingly, in the heat exchanger 1 of the first embodiment, the design freedom can be enlarged in size, arrangement and others of the metal filter 17.

### <As to the operation of the heat exchanger>

In the thus-constructed heat exchanger, first, the flowing medium at a high temperature at approximately 60°C, which flows in the chamber R1 of the tank 2 from the compressor side through the inlet port 6a of the input connector 6, is cooled down due to the heat exchange between the flowing medium and airflow generated during a vehicle running or airflow generated by a fan that passes through the core part 4, while the flowing medium flows through the chamber R2 of the tank 3, the chamber R3 of the tank 2, and the chamber R4 of the tank 3, turning in these order through the respective tubes 4a.

Next, as shown in FIG. 9, the flowing medium (indicated by broken arrows) that has flowed in the chamber R4 of the tank 3 flows in the chamber P1 of the receiver tank 5 through the communicating holes 8a of the intermediate member 8 to be separated into gas and liquid, and then it flows in the chamber P2 through the metal filter 17.
In this case, the filter main body part 17a of the metal filter 17 can remove contaminants contained in the flowing medium.
In addition, in the case where the reception member 20 is a drying agent, water in the receiver tank 5 can be absorbed, thereby the gas-liquid separation performance being improved.
Alternately, in a case where the reception member 20 is a fluorescent agent, the leakage of the flowing medium can be easily detected when the shelter density of the interior of the receiver tank 5 is damaged from any cause.

Next, the flowing medium in the chamber P2 flows in the chamber R5 of the tank 3 through the communicating hole 9a of the intermediate member 9.

Finally, the flowing medium that flows in the chamber R5 of the tank 3 is cooled down due to the heat exchange between the flowing medium and the airflow generated during the vehicle running or the airflow generated by the fan that pass through the core part 4, while the flowing medium flows through the chamber R6 of the tank 2 through the respective tubes 4a, and then it is outputted toward the evaporator through the output port 7a of the output connector 7 to function as, what is called, a condenser.

Next, the effects of the heat exchanger 1 and its manufacturing method of the first embodiment will be listed below.
(1) The heat exchanger 1 includes the pair of tanks 2 and 3 arranged a certain distance apart from each other, the plurality of tubes 4a whose both end portions are connected with the pair of tanks 2 and 3, the long receiver tank 5 arranged adjacently to and along the tank 3 and connected with the tank 3, and the reception member 20 contained in the receiver tank 5, where the upper opening end portion 13b has the opening portion at the one side in the longitudinal direction of the receiver tank 5 and having the reduced diameter and the block member 15 blocks the upper opening end portion 13b. The entire of the heat exchanger 1 except the reception member 20 and the block member 15 are integrally formed by the brazing process. The reception member 20 is inserted through the upper opening end portion 13b and arranged in the receiver tank 5 after the brazing process, and the block member 15 is brazed with the upper opening end portion 13b after the reception member 20 is inserted and arranged.
   Therefore, the block member 15 of the receiver tank 5 can be nicely joined, thereby the pressure tightness of the receiver tank 5 being improved.
(2) The block member 15 is joined by brazing with the upper opening end portion 13 due to the high-frequency induction heat generated by the work coil 32.
   Therefore, the block member 15 can be joined by brazing with the opening end portion in an easy way in addition to the operation and the effects similar to those in (1).
   Further, the work coil 32 can be sufficiently assured to have a certain clearance from the main body 13.
(3) The receiver tank 5 includes the first divided member 11 shaped like a circular cylinder with the bottom portion, and the second divided member 12 that is communicatably connected with the one side of the first divided member 11 in the longitudinal direction and shaped like a circular cylinder with the reduced diameter portion 12 whose diameter is decreased up to the outer diameter of the upper opening end portion 13.
   Therefore, the upper opening end portion 13b can be easily formed so as to have the diameter being decreased at the one side of the receiver tank 5 in the longitudinal direction.
   In addition, it can be easily manufactured because the amount of processing such as cutting becomes smaller relative to that in a case where the receiver tank 5 is formed as one unit. Further, the area of the joint portion B of the block member 15 can be decreased, and accordingly the cost of material (flux and brazing filler material) used for the joining can be reduced.
(4) The tank 3 and the first divided member 11 are communicatably connected through the intermediate members 8 and 9, and the restricting portion (the fixation portion 11c) is formed as one unit to prevent the relative displacement of the intermediate members 8 and 9 on the outer circumferential portion of the first divided member 11.
   Therefore, the intermediate members 8 and 9 can be fixed with the receiver tank 5 with a high degree of accuracy.
(5) The restricting portion (the fixation portion 11c) restricts the relative displacement of the intermediate members 8 and 9 in the width direction of the heat exchanger 1.
   Therefore, it can prevent the relative displacement of the intermediate members 8 and 9 in the width direction of the heat exchanger 1, where the displacement is a particular problem during the joining by brazing.
(6) The restricting portion (the fixation portion 11c) has the cross section shaped like a letter U to open toward the tank 3 of the heat exchanger 1, and it extends in the longitudinal direction of the first divided member 11. The intermediate members 8 and 9 are slid along the restricting portion (the fixation portion 11c) so as to be guided therein, and they are positioned and then joined by brazing. Therefore, it can obtain the operation and effects similar to those in (5).
(7) The intermediate members 8 and 9 are fixed with the restricting portion (the fixation portion 11c) by caulking the both side walls 11a and 11a facing to each other, which have the cross section shaped like a letter U. Therefore, the intermediate members 8 and 9 can be positioned in a stable state thereof.
(8) The second divided member 12 is fixed on the tank 3 through the holding member 16 having the configuration similar to those of the intermediate members 8 and 9. Therefore, the number of kinds of parts can be decreased.
(9) The reception member employs the drying agent 20 (or the fluorescent agent).
   Therefore, the reception member, which cannot be contained in the brazing process of the entire of the heat exchanger 1 like the drying agent, the fluorescent agent and the like, can be used preferably in a case where it is arranged.
(10) The method is used for manufacturing the heat exchanger including the pair of tanks 2 and 3 arranged a certain distance apart from each other, the plurality of tubes 4a whose both end portions are connected with the pair of tanks 2 and 3, the long receiver tank 5 arranged along and adjacently to the tank 3 and connected with the tank 3, and the reception member 20 contained in the receiver tank 5, where the upper opening end portion 13b has the opening portion at the one side in the longitudinal direction of the receiver tank 5 and having the reduced diameter and the block member 15 blocks the upper opening end portion 13b. The method has the process of integrally forming by the brazing process the entire of the heat exchanger 1 except the reception member 20 and the block member 15, the process of inserting the reception member 20 through the upper opening end portion 13b and arranging the reception member 20 in the receiver tank 5 after the brazing process, and the process of the joining by brazing the block member 15 with the upper opening end portion 13b after the reception member 20 is inserted and arranged therein.
   Therefore, it can obtain the operation and the effects similar to those in (1).

### <SECOND EMBODIMENT>

Hereinafter, a heat exchanger and its manufacturing method of a second embodiment of the present invention will be described with reference to the accompanying drawings.
In the second embodiment, the construction members similar to those of the first embodiment are indicated by the same reference numbers. Their explanations are omitted and only different ones will be in detail described.

FIG. 25 is a view explaining high-frequency induction heating in the heat exchanger and its manufacturing method of the second embodiment.
As shown in FIG. 25, in the heat exchanger and its manufacturing method of the second embodiment, blackbody coating material 50 is applied on the periphery of a joint potion of a block member 15 in advance, and an infrared temperature sensor 51 is provided to measure the surface temperature of the blackbody coating material 50.
In addition, the temperature detected by the infrared temperature sensor 51 is sequentially transmitted to a controller 33.
Incidentally, the block member 15 in the second embodiment employs the type explained in FIGS. 21 to 23 of the first embodiment, which is not limited. The position and the number of the blackbody coating material 50 may be set appropriately.

Then, the controller 33 checks the temperature transmitted sequentially from the infrared temperature sensor 51 and the temperature profile explained in FIG. 16 of the first embodiment so as to accord with each other, it controls by a feed-back loop, sending a command signal for adjusting heating to a communicator 31.

Accordingly, in the heat exchanger and its manufacturing method of the second embodiment, the temperature can be managed according to a situation of the temperature rising of the joint portion of the block member 15, thereby providing a nice joining by brazing.
Specifically, in the high-frequency induction heating, the brazing performance changes according to a minor difference of the individual joint portion of the block member 15, the outside air temperature and the humidity. Therefore, the temperature of the joint portion is measured to always obtain the stable brazing performance, thereby quality of products being improved.

Incidentally, a noncontact type temperature sensor such as a radiation thermometer may be employed to measure the temperature of the block member 15.
In addition, the blackbody coating material 50 may be provided on the whole of the surface of the block member 15. In this case, no other reflected heat enters the infrared temperature sensor 51, and consequently the temperature can be detected with a high degree of accuracy.

Nex5, the heat exchanger and its manufacturing method of the second embodiment has the effects listed below in addition to those of the first embodiment.
(11) The block member 15 is joined by brazing with the upper opening end portion 12b by the high-frequency heating generated by the work coil 32. The temperature of the joint portion of the block member 15 is measured by a temperature measurement means (the blackbody coating material 50 and the infrared temperature sensor41). The temperature of the high-frequency heating by the work coil 32 is controlled by the feed-back loop according to the temperature change of the joint portion detected by the temperature measurement means (the blackbody coating material 50 and the infrared temperature sensor41).
   Therefore, the jointing by brazing of the block member 15 can be stably carried out.
(12) The temperature measurement means includes the blackbody coating material 50 provided on the periphery of the joint portion of the block member 15, and the infrared temperature sensor41 for measuring the temperature change of the blackbody coating material 50. Therefore, the operation and effect similar to those of (11) can be obtained.

### <THIRD EMBODIMENT>

Herein, a heat exchanger and its manufacturing method of a third embodiment of the present invention will be described with reference to the accompanying drawings.
In the third embodiment, the construction members similar to those of the first embodiment are indicated by the same reference numbers. Their explanations are omitted and only different ones will be in detail described.

FIG. 26 is a perspective view of a receiver tank that is used in the heat exchanger of the third embodiment.

As shown in FIG. 26, in the heat exchanger of the third embodiment, the entire length of a first divided member 11 of a receiver tank 5 is set shorter to a large extent relative to that of a second divided member 12.

In addition, at the position corresponding to a holding member 16, a bracket member 60, which has a configuration shaped like the first divided member 11 whose length is shortened, is joined by brazing on the outer circumference of the second divided member 12.
Therefore, the holding member 16 can be joined by brazing with the second divided member 12 through the bracket member 60.
In addition, the bracket member 60 can be easily obtained by setting a cut-off length of the first divided member 11 to be adjusted according to the entire length of the bracket member 60 in its manufacture.

Herein, the first divided member 11 is made as one molded part by extrusion processing of raw material in order to assure its formability. Therefore, the fixation portion 11c is formed along the entire length in the longitudinal direction of the first divided member 11. As the length of the first divided member 11 is set shorter than that of the second divided member 12, the entire lengths of the both side walls 11 a and 11 a can be set shorter, As a result, the weight and the heat mass of the first divided member 11 can be suppressed to the maximum.

Therefore, in the heat exchanger of the third embodiment, the main body 13 can be formed smaller in weight and size, and the joining of the block member 15 by brazing can be nicely carried out because of reduction in its heat mass.

Next, the heat exchanger and its manufacturing method of the third embodiment have the effects described below in addition to those of the first embodiment.
(13) The entire length of the first divided member 11 is set shorter than that of the second divided member 12.
   Therefore, the main body 13 can be formed smaller in weight and size, and the joining of the block member 15 by brazing can be nicely carried out because of the reduction in heat mass.

### <FOURTH EMBODIMENT

Herein, a heat exchanger and its manufacturing method of a fourth embodiment of the present invention will be described with reference to the accompanying drawings.
The fourth embodiment solves the problem of the prior art by changing a length of a main body without dividing the main body of a receive tank into a first divided member and a second divided member, and also without decreasing a diameter of a part of the main body.

FIG. 27 is an exploded perspective view of the receive tank that is used in a heat exchanger of the fourth embodiment. FIG. 28 is a perspective view of the receiver tank. FIG 29 is a cross sectional side view explaining an upper interior of the receiver tank.
In the heat exchanger and its manufacturing method of the fourth embodiment, the construction members similar to those of the first embodiment are indicated by the same reference numbers. Their explanations are omitted and only different ones will be in detail described.

As shown in FIGS. 27 and 28, the receiver tank 5 is equipped with the main body 11 shaped like a circular cylinder, and block members 14 and 15 shaped like a dish and covering opening end portions 12a and 12b of the main body 11.
A periphery of an upper end portion of the main body 11 is formed as a cylinder portion 13 shaped like a circular cylinder. The main body 11 is formed as the cylinder portion shaped like the circular cylinder by a cutting off a portion of the upper end of a fixation portion 11c after shape forming raw material by extrusion processing.

On the other hand, the block member 14 is formed with a bottom portion 14a shaped like a disc, and an insertion portion 14b rising like a circular projection from an outer circumference of the bottom portion 14a toward the main body 11 and insertable to be engaged with an inner circumference of a lower opening end portion 12a.
The block member 15 is formed with a bottom portion 15a shaped like a disc and an insertion portion 15b rising like a circular projection from an outer circumference of the bottom portion 15a toward the main body 11 and insertable to be engaged with an inner circumference or a lower opening end portion 12b.

Further, as shown in FIG. 28, the both block members 14 and 15 are pressed into the inner sides of the respective upper and lower opening end portions 12a and 12b of the main body 11 so that the bottom portions 14a and 15b can be fixed in a state where they are in plane with end portions 12a and 12b.

As shown in FIG. 29, a periphery of an upper end portion of the main body 11 has a cylinder portion 13 projecting higher relative to the tank 3 by the height length L1 outward in the longitudinal direction. This height length L1 is set to assure a work space for joining the intermediate member 15 and the main body 11 at the joining process thereof in a state where the joint portion B (refer to FIG. 30) of the block member 15 and the main body 11 is placed over the upper end of the tank 3 and also to allow a deformation of the tank 3 due to the heating of the joint portion B.
The other construction members are constructed similarly to those of the first embodiment.

The thus-constructed heat exchanger of the fourth embodiment is assembled similarly to the first embodiment. In this case, as the cylinder portion 13 of the receiver tank 5 projects upward higher relative to the tank 3 by the height length L1 in the joining the joint portion B as shown in FIG. 29, nothing exists near the periphery of the upper opening end portion 12 (and the block member 15) of the main body 11 because the work coil 32 is positioned over the tank 3
Therefore, a sufficient space for joining operation can be assured. Consequently, a certain clearance can be easily assured between the work coil 32 and the main body 11 (the joint portion of the block member 15).
In addition, there is no possibility of a harmful effect on the tank 3 due to heat generated by the high-frequency induction heating, so that the tank 3 can be protected.
The assembly and operation of the others are similar to those of the first embodiment, and accordingly their explanations are omitted.

In the heat exchanger and its manufacturing method of the fourth embodiment, the heat exchanger 1 includes the pair of tanks 2 and 3 arranged the certain distance apart from each other, the plurality of tubes 4a whose both end portions are connected with the pair of tanks 2 and 3, the long receiver tank 5 arranged along and adjacently to the tank 3 and connected with the tank 3, and the reception member 20 contained in the receiver tank 5, where the upper opening end portion 13b has the opening portion at the one side in the longitudinal direction of the receiver tank 5 and having the reduced diameter and the block member 15 blocks the upper opening end portion 13b. The whole of the heat exchanger 1 except the reception member 20 and the block member 15 are integrally joined by brazing. The reception member 20 is inserted in the receiver tank 5 through the upper opening end portion 12b to be arranged therein after the brazing process, and the block member 15 is joined by brazing on the upper opening end portion 12b after the reception member 20 is inserted and arranged therein.
In addition, the block member 15 is joined by brazing on the upper opening end portion 12b by the high-frequency induction heating generated by the work coil 32 after the reception member 20 is inserted and arranged in the receiver tank 5.
Therefore, the fourth embodiment has the following effect in addition to the above-described (1), (2) and (9) of the first embodiment. (14) Only setting the length of the main body 11 of the receiver tank 5 to be longer than that of the upper end of the tank 3 enables the receiver tank 5 to be easily manufactured.

### <FIFTH EMBODIMENT>

In a method for manufacturing a heat exchanger of the fifth embodiment, the high-frequency induction heating as well as that of the second embodiment is applied to the heating of the heat exchanger of the fourth embodiment.
As shown in FIG. 31, the blackbody coating material 50 is applied in advance on the periphery of the joint portion of the block member 15, and the infrared temperature sensor 51 is provided to measure the surface temperature of the blackbody coating material 50.
The temperature detected by the infrared temperature sensor 51 is sequentially transmitted to the controller 33.
The position and the number of the blackbody coating material 50 may be set appropriately.

The controller 33 sequentially checks the temperature transmitted from the infrared temperature sensor 51 and the temperature profile explained in FIG. 16 of the first embodiment with each other, and it controls by the feed-back loop so as to accord them with each other, sending a command signal for adjusting the heating to a communicator 31.

Accordingly, in the heat exchanger and its manufacturing method of fifth embodiment, the temperature can be managed according to a situation of the temperature rising of the joint portion of the block member 15, thereby providing a nice joining by brazing.
Specifically, in the high-frequency induction heating, the brazing performance changes according to a minor difference of the individual joint portion of the block member 15, the outside air temperature and the humidity. Therefore, the temperature of the joint portion is measured so that the stable brazing performance can be always obtained and thereby the quality of products can be improved.

Incidentally, a noncontact type temperature sensor such as a radiation thermometer may be employed in order to measure the temperature of the block member 15.
In addition, the blackbody coating material 50 may be provided on the whole of the surface of the block member 15. In this case, no other reflected heat enters the infrared temperature sensor 51, and accordingly the temperature can be detected with a high degree of accuracy.

As explained above, the method for manufacturing the heat exchanger of the fifth embodiment can obtain the effects similar to those of the second embodiment.

As described above, the present invention is not limited to the above-described embodiments, a design changes and the like are contained in the present invention as long as they do not depart from the subject-matter of the present invention.
For example, the reception member is not limited to the drying agent and the fluorescent agent, and it may be one of the various pipes, the metal filters and others.

## Claims

1. A heat exchanger comprising:
a pair of tanks arranged a certain distance apart from each other;
a plurality of tubes whose both end portions are communicatably connected with the pair of tanks;
a receiver tank having a main body that is arranged along and adjacently to one of the pair of tanks, the receiver tank being communicatably connected with the one of the tanks and having an opening end portion provided at one side in a longitudinal direction of the main body;
a reception member having a shape to be insertable from the opening end portion, the reception member being contained in the receiver tank; and
a block member fixed to the opening end portion to cover the opening end portion, wherein
the opening end portion is formed to be a reduced diameter portion in which an outer diameter of the opening end portion is set smaller than an outer diameter of the other side in the longitudinal direction of the main body.

2. The heat exchanger according to claim 1, wherein
the main body of the receiver tank includes a first divided member shaped like a circular cylinder with a bottom portion, and a second divided member communicatably connected with the one side in the longitudinal direction of the first divided member and shaped like a circular cylinder having the reduced diameter portion whose diameter is reduced up to the opening end portion.

3. The heat exchanger according to claim 2, wherein
the one of tanks and the first divided member are communicatably connected with each other through an intermediate member, and wherein
a restricting portion for preventing a relative displacement between the first divided member and the intermediate portion is formed on an outer circumference of the first divided member as one unit.

4. The heat exchanger according to claim 3, wherein
the restricting portion restricts the relative displacement of the intermediate member in a width direction of the heat exchanger.

5. The heat exchanger according to claim 4, wherein
the restricting portion has a cross section shaped like a letter U to open toward the tanks of the heat exchanger, extending in a longitudinal direction of the first divided member, and wherein
the restricting portion and the intermediate portion are joined with each other, being positioned relative to each other.

6. The heat exchanger according to claim 5, wherein
the intermediate member is fixed, being sandwiched by both side walls of the restricting portion, and wherein
the both side walls have a cross section shaped like a letter U to face to each other.

7. The heat exchanger according to one of claims 3 to 6, wherein
the second divided member is fixed and supported on the one of tanks through a holding member having the same configuration as the intermediate member.

8. The heat exchanger according to one of claims 3 to 6, wherein
an entire length of the first divided member is set shorter than an entire length of the second divided member.

9. The heat exchanger according to one of claims 1 to 8, wherein
the reception member is a drying agent or a fluorescent agent.

10. A heat exchanger comprising:
a pair of tanks arranged a certain distance apart from each other;
a plurality of tubes whose both end portions are communicatably connected with the pair of tanks;
a receiver tank having a main body that is arranged along and adjacently to one of the pair of tanks, the receiver tank being communicatably connected with the one of the tanks and having an opening end portion provided at one side in a longitudinal direction of the main body;
a reception member having a shape to be insertable from the opening end portion, the reception member being contained in the receiver tank; and
a block member fixed to the opening end portion to cover the opening end portion, wherein
the opening end portion is formed to project outward in the longitudinal direction relative to the one of tanks.

11. The heat exchanger according to claim 10, wherein
the one of tanks and the first divided member are communicatably connected with each other through an intermediate member, and wherein a restricting portion for preventing a relative displacement between the first divided member and the intermediate portion is formed on an outer circumference of the first divided member as one unit.

12. The heat exchanger according to claim 11, wherein
the restricting portion restricts the relative displacement of the intermediate member in a width direction of the heat exchanger.

13. The heat exchanger according to claim 12, wherein
the restricting portion has a cross section shaped like a letter U to open toward the tank of the heat exchanger, extending in a longitudinal direction of the first divided member, and wherein
the restricting portion and the intermediate portion are jointed with each other, being positioned relative to each other.

14. The heat exchanger according to claim 13, wherein
the intermediate member is fixed, being sandwiched by both side walls of the restricting portion, and wherein
the both side walls have a cross section shaped like a letter U to face to each other.

15. The heat exchanger according to one of claims 11 to 14, wherein
the receiver tank is fixed and supported on the one of tanks through a holding member having the same configuration as the intermediate member.

16. The heat exchanger according to one of claims 10 to 15, wherein
the reception member is a drying agent or a fluorescent agent.

17. A method for manufacturing a heat exchanger which includes:
a pair of tanks arranged a certain distance apart from each other;
a plurality of tubes whose both end portions are communicatably connected with the pair of tanks;
a receiver tank having a main body that is arranged along and adjacently to one of the pair of tanks, the receiver tank being communicatably connected with the one of the tanks and having an opening end portion provided at one side in a longitudinal direction of the main body;
a reception member having a shape to be insertable from the opening end portion, the reception member being contained in the receiver tank; and
a block member fixed to the opening end portion to cover the opening end portion,
the method comprising:
a process of preparing the receiver tank that has one of the opening end portion whose outer diameter is set smaller than an outer diameter of the other side in the longitudinal direction of the main body and the opening end portion which project outward in the longitudinal direction relative to the one of tanks;
a process of preparing the tanks, the plurality of tubes, the reception member and the block member which constitute the heat exchanger;
a process of integrally forming the whole of the heat exchanger except the reception member and the block member by brazing;
a process of inserting and arranging the reception member in the receive tank through the opening end portion after the brazing process; and
a process of joining the block member on the opening end portion by one of welding and brazing.

18. The method for manufacturing the heat exchanger according to claim 17, wherein
the block member is joined by brazing on the opening end portion by high-frequency induction heating generated by a work coil, wherein
a temperature measurement means measures a temperature of a joint portion of the block member in the brazing process, and wherein
a temperature of the high-frequency induction heating by the work coil is controlled by a feed-back loop according to the temperature of the joint portion measured by the temperature measurement means.

19. The method for manufacturing the heat exchanger according to claim 18, wherein
the temperature measurement means includes a blackbody coating material provided on a periphery of the joint portion of the block member, and a sensor for measuring a temperature change of the blackbody coating material.
